# EUROPEAN PATENT APPLICATION

(11) **EP 0 552 792 A1**
(43) Date of publication of application: **28.07.1993**
(21) Application number: 93100952.6
(22) Date of filing: 22.01.1993
(51) Int. Cl.: G02B 6/42

(54) **Photoreceiver having semi-conductor light receiving element and lens**

(30) Priority: 24.01.1992 JP 34288/92
(71) Applicant: NEC CORPORATION, Tokyo (JP)
(72) Inventor: Matsuzawa, Hideaki, c/o NEC Corporation, Tokyo (JP)
(74) Representative: Glawe, Delfs, Moll & Partner

(57) **Abstract**

A photoreceiver which comprises a photodiode (21) and an optical lens (22) housed in a casing (20). An optical fiber (23) connected to the casing is optically coupled to the diode through the lens. An end of the fiber (23b) is positioned so that a focal point (33) generated when a light beam emitted from the end passes through the lens shifts to the lens side or opposite side thereof in the optical axis direction with respect to a light receiving face (21a) of the photodiode. Optical power density on the light receiving face is lowered to inhibit generation of a space-charge effect for suppressing intermodulation distortion. Higher return loss effect within the maximum quantum efficiency can be obtained.

## Description

### BACKGROUND OF THE INVENTION

### 1. Field of the Invention

The invention relates to a photoreceiver for use with optical communication systems, optical information processing, etc., and more particularly to a photoreceiver having a semiconductor light receiving element to which an optical fiber, if connected to the photoreceiver, is optically coupled through a lens.

### 2. Description of the Related Art

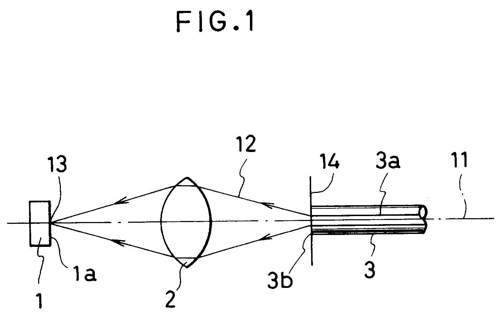

Fig.1 shows an example of a conventional photoreceiver which comprises a photodiode 1 and an optical lens 2. The photodiode 1 is disposed so that the center of the light receiving area of a light receiving face 1a of the photodiode 1 matches an optical axis 11 of the optical lens 2. When an optical fiber 3 having a core 3a in its center is connected to the photoreceiver, the photodiode 1 is "optical-lens-coupled" or optically coupled through the lens to the fiber 3. A light beam 12 emitted from an end 3b of the core 3a of the fiber 3 is converged into the photodiode 1 through the lens 2, so that the light beam 12 emitted from the core 3a is efficiently guided into the light receiving face 1a of the photodiode 1. Needless to say, the fiber 3 is connected to the photoreceiver so as to match the optical axis 11.

When the optical fiber 3 is connected to the photoreceiver, a position 14 of the end 3b of the optical fiber 3 is set on the optical axis 11 so that the position on which the light beam 12 emitted from the end 3b of the fiber 3 converges through the lens 2, that is, an focal point 13 comes onto the light receiving face 1a of the photodiode 1 to maintain the high optical coupling efficiency between the fiber 3 and the photodiode 1. The focal point 13 is also set so as to come to the center of the light receiving area of the light receiving face 1a to provide the fiber 3 with the maximum tolerance in the direction perpendicular to the optical axis 11.

The light receiving face 1a is formed with a antireflection coating film to suppress reflection of the light beam 12 for increasing the coupling efficiency.

An optical fiber whose end is cut obliquely to the optical axis 11 may be used as the optical fiber in order to reduce the quantity of the return light which is reflected on the light receiving face 1a and enters the inside of the core through the end. If the return light is sent to a semiconductor laser as a light source, the static and dynamic characteristics of the laser are disordered; as a result, there is a possibility that the reliability of the optical transmission system containing the element and the laser will lower. For this reason, that optical fiber having the obliquely-cut end can be provided to suppress the possibility.

On the other hand, an extremely low intermodulation distortion characteristic is required to use the above-mentioned photoreceiver with optical cable television (CATV) for analog transmission system. Specifically, second order intermodulation distortion should be less than -80 dBc in general, provided that the input optical power is 0.5 mW and the optical modulation degree per laser is 50%, measured by a 1.3 µm-wave 2-laser, 2-tone method. However, the conventional photoreceiver shown in Fig.1 is hard to satisfy such a requirement for the second order intermodulation distortion because of a space-charge effect occurring in the photodiode 1. The space-charge effect refers to a phenomenon where electrons generated partially at high density in a semiconductor light receiving element by incident light beam distort partially the internal electric field of the element.

To use the conventional photoreceiver in Fig. 1 with an analog optical transmission system, a high return loss characteristic of less than -40 dB is generally required. However, the conventional photoreceiver has no enough capability to satisfy the requirement because light reflection of 1% or so, which corresponds to the return loss of approximately -30 dB, cannot be avoided even if the light receiving face 1a of the photodiode 1 is formed with an antireflection coating film of a multi layer structure and further an optical fiber whose end is formed obliquely to the optical axis 11 is used.

### SUMMARY OF THE INVENTION

Accordingly, it is an object of the invention to provide a photoreceiver which has a higher capability of suppressing intermodulation distortion than the conventional photoreceiver described above.

Another object of the invention is to provide a photoreceiver which can provide a higher return loss than the conventional photoreceiver described above.

According to the invention, there is provided a photoreceiver which comprises a casing to which an end of an optical fiber can be connected and, a semiconductor light receiving element and an optical lens housed in the casing. The fiber connected to the casing is optically coupled to the light receiving element through the lens. The end of the fiber is positioned so as to satisfy the following relationship with respect to the light receiving face of the light receiving element. A focal point generated when a light beam emitted from the end of the fiber passes through the lens shifts to the lens side or opposite side in the optical axis direction with respect to the light receiving face.

With the photoreceiver of the invention, the end of an optical fiber is positioned as described above, so that the diameter of a light beam converged on the light receiving face of the light receiving element is larger than that when the focal point of a light beam emitted from the fiber end comes onto the light receiving face. Therefore, the optical power density on the light receiving face is lowered to inhibit generation of the space-charge effect within the light receiving element for suppressing intermodulation distortion.

The return quantity of the light reflected on the light receiving face to the inside of the fiber is smaller than that when the focal point of a light beam emitted from the fiber end comes onto the light receiving face, thus resulting in a higher return loss. When the focal point exists on the light receiving face, the reflected light returns to the inside of the fiber via the same path as the incident light, thus the maximum quantity of light returns to the fiber.

In one preferred embodiment of the invention, the end of the optical fiber is positioned so that the focal point of the light beam shifts to the side of the lens in the optical axis direction with respect to the light receiving face. This embodiment takes an advantage of a still better improvement in the return loss as compared with another embodiment where the fiber end shifts to the opposite side to the lens.

Preferably, the shift amount of the fiber end is set, for example 20 µm or more, so that the optical power density on the light receiving face becomes less than 100 W/cm².

In the invention, the end of an optical fiber may be a plane at a right angles or oblique to the optical axis of the fiber. Any desired lenses can be used as the optical lens: A single lens may be used; a lens may be integral with the light receiving element or optical fiber; or single lenses may be combined. Spherical or aspherical lenses or rod lenses can also be used. For the semiconductor light receiving element and the casing, any desired ones can be used.

### BRIEF DESCRIPTION OF THE DRAWINGS

In the accompanying drawings:
Fig.1 is a sectional view showing a schematic configuration of a conventional photoreceiver;
Fig.2 is a sectional view showing a schematic configuration of a photoreceiver according to a first embodiment of the invention;
Fig.3 is a sectional view showing a schematic configuration of a photoreceiver according to a second embodiment of the invention;
Fig.4 is a sectional view showing a schematic configuration of a photoreceiver according to a third embodiment of the invention;
Fig.5 is a sectional view showing a schematic configuration of a photoreceiver according to a fourth embodiment of the invention;
Fig.6 is a graph showing the relationships between displacement of an end of an optical fiber and quantum efficiency and second order intermodulation distortion; and
Fig.7 is a graph showing the relationships between displacement of an end of an optical fiber and quantum efficiency and return loss.

### DESCRIPTION OF THE PREFERRED EMBODIMENTS

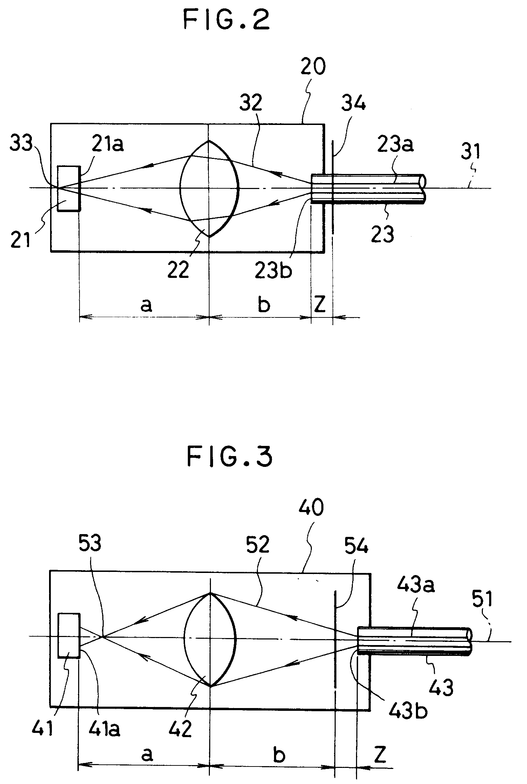

Referring now to FIGS.2-7 of the drawings, preferred embodiments of the invention will be described below.

### [First embodiment]

Fig.2 shows a photoreceiver according to a first embodiment of the invention. The photoreceiver has a casing 20, a photodiode 21 and an optical lens 22 having two spherical surfaces. The photodiode 21 and lens 22 are spaced apart. The distance between a light receiving face 21a of the photodiode 21 and the center line of the lens 22 is a. The center of the light receiving area of the light receiving face 21a matches an optical axis 31 of the lens 22.

One end of an optical fiber 23 containing a core 23a in its center can be connected to the opposite end of the casing 20 to the photodiode 21. When the fiber 23 is connected to the casing 20, the end 23b of the fiber 23 is fixed at a distance of b apart from the lens 22. At the time, the center axis of the fiber 23 matches the optical axis 11.

When a light beam 32 is emitted from the end 23b of the fiber 23 connected to the photoreceiver, the light beam 32 is converged through the lens 22 and thereafter arrives at the photodiode 21. In the embodiment, a focal point 33 of the light beam 32 is adapted to come to the rear of the light receiving face 21a of the photodiode 21, or the side far from the lens, rather than onto the light receiving face 21a, as shown in Fig. 2. The end 23b of the fiber 23 used here is a plane at right angles to the optical axis 31.

Reference numeral 34 denotes a base position of the end 23b of the fiber 23 when the focal point 33 of the light beam 32 comes onto the light receiving face 21a of the photodiode 21. If the end 23b is placed at the base position 34, the diameter of the light beam 32 converged on the light receiving face 21a is minimized. In the embodiment, the end 23b shifts by a distance z from the base position 34 to the side of the lens 22.

With the photoreceiver having the configuration, the diameter of the light beam 32 converged on the light receiving face 21a of the photodiode 21 becomes larger than that when the end 23b lies at the base position 34, so that the optical power density on the light receiving face 21a is reduced. Therefore, the space-charge effect in the diode 21 is suppressed; as a result, the intermodulation distortion is reduced. In addition, since the return quantity of light reflected on the light receiving face 21a to the inside of the fiber 23 is smaller than that when the end face 23b lies at the base position 34, a higher return loss can be provided.

An experimental example is given below. In the experiment, a photodiode of an InGaAs/InP system having a 80 µ -diameter light receiving area on the light receiving face 21a was used as the photodiode 21 and, a spherical lens whose curvature radius of the both surfaces are 650 µm and refractive index is 1.482 was used as the optical lens 22.

The optical disposition shown in Fig.2 was provided as follows: First, the photodiode 21 was fixed so that the distance between the light receiving face 21a of the photodiode 21 and the center line of the optical lens 22, namely, the distance a shown in Fig.2 becomes 1700 µm. Next, the lens 22 was fixed so that the center of the light receiving area of the light receiving face 21a matches the optical axis 31 of the lens 22.

Then, the optical fiber 23 was moved on the optical axis 31 to find a position of the fiber 23 at which the focal point 33 of the light beam 31 matches the light receiving face 21a of the photodiode 21. At this position, the fiber 23 was temporarily fixed, and the tolerance in the direction vertical to the optical axis 31 of the end 23b was adjusted so that the photosensitivity of the photodiode 21 is maximized. Thus, the base position 34 was found to minimize the light beam diameter on the light receiving face 21a.

At the base position 34, the distance b between the center line of the lens 22 and the end 23b of the optical fiber 23 was 920 µm and the diameter of the light beam 32 on the light receiving face 21a was 20 µm. At the time, the optical power density on the light receiving face 21a was 160 W/cm² with the incident light power 0.5 mW.

Subsequently, the end 23b was moved by 100 µm along the optical axis 31 from the base position 34 toward the lens 22 to set the distance b between the center line of the lens 22 and the end 23b to 820 µm for obtaining the disposition shown in Fig.2.

In the disposition in Fig.2, the focal point 33 is positioned behind the light receiving face 21a of the photodiode 21, so that the diameter of the light beam 32 on the light receiving face 21a was enlarged to 50 µm from 20 µm. As a result, the optical power density on the light receiving face 21b was reduced to about 1/6 from 160 W/cm² to 25 W/cm².

Since the return quantity of light reflected on the light receiving face 21a to the inside of the fiber 23 was also reduced, the disposition provided a higher return loss than the conventional disposition.

### [Second embodiment]

Fig.3 shows a photoreceiver according to a second embodiment of the invention. Like the first embodiment, the photoreceiver of the second embodiment comprises a casing 40, a semiconductor light receiving element 41 and an optical lens 42, and an optical fiber 43 having a core 43a can be connected to the casing 40. The second embodiment is the same as the first embodiment except that the end 43b of the fiber 43 is moved far away from the lens 42 along an optical axis 51 in contrast to the first embodiment.

With the photoreceiver according to the second embodiment, the diameter of a light beam 52 converged on a light receiving face 41a of the photodiode 41 also becomes larger than that when the end 43b of the optical fiber 43 lies at a base position 54, so that the optical power density on the light receiving face 41a is reduced. Therefore, generation of the space-charge effect in the photodiode 41 is suppressed and as a result, the intermodulation distortion is reduced.

In addition, since the return quantity of light reflected on the light receiving face 41a to the inside of the fiber 43 is smaller than that when the end face 43b lies at the base position 54, a higher return loss can be obtained.

Given below is an experimental example using the same diode, lens, and optical fiber as in the first embodiment.

The optical disposition shown in Fig.3 was provided as follows: First, the base position 54 was set as in the first embodiment. At the base position 54, the distance b between the center line of the lens 42 and the end 43b of the optical fiber 43 was 920 µm and the diameter of the light beam 52 on the light receiving face 41a of the photodiode 41 was 20 µm. At the time, the optical power density on the light receiving face 41a was 160 W/cm² with the incident light power 0.5 mW. The values are the same as in the first embodiment.

Next, the end 43b was moved by 100 µm along the optical axis 51 from the base position 54 as it was separated from the lens 42 to set the distance b to 1020 µm for obtaining the disposition shown in Fig.3.

In the disposition in Fig.3, a focal point 53 is positioned ahead of the light receiving face 41a of the photodiode 41, so that the diameter of the light beam 52 on the light receiving face 41a was enlarged to 50 µm from 20 µm. Resultantly, the optical power density on the light receiving face 41a was also reduced to about 1/6 from 160 W/cm² to 25 W/cm².

### [Third embodiment]

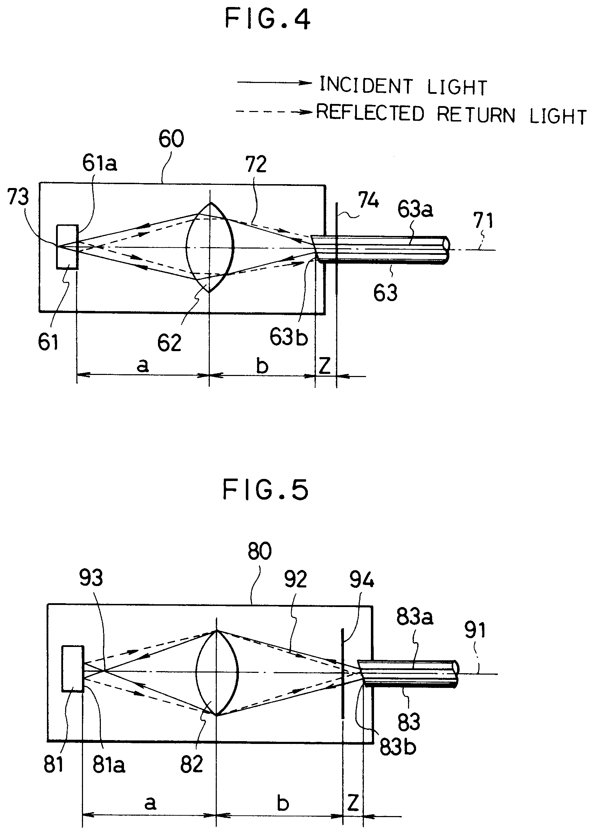

Fig.4 shows a photoreceiver according to a third embodiment of the invention. Like the first and second embodiments, the photoreceiver of the third embodiment comprises a casing 60, a semiconductor light receiving element 61 and an optical lens 62. An optical fiber 63 having a core 63a can be connected to the casing 60. The third embodiment is substantially same as the first embodiment except that an end 63b of the optical fiber 63 is formed obliquely to an optical axis 71.

In the third embodiment, the distance b means a distance between the center of the oblique end 63b of the optical fiber 63 and the center line of the lens 62.

With the photoreceiver according to the third embodiment, the diameter of a light beam 72 converged on a light receiving face 61a of the photodiode 61 also becomes larger than that when the end 63b of the optical fiber 63 lies at a base position 74, so that the optical power density on the light receiving face 61a was reduced to 25 W/cm². Since the return quantity of light reflected on the light receiving face 61a to the inside of the fiber 63 is also small, a higher return loss was obtained. In addition, since the end 63b of the fiber 63 is oblique to the optical axis 71, the resultant return loss is higher than the return loss in the first embodiment.

### [Fourth embodiment]

Fig.5 shows a photoreceiver according to a fourth embodiment of the invention. Like the first to third embodiments, the photoreceiver of the fourth embodiment comprises a casing 80, a semiconductor light receiving element 81, and an optical lens 82. An optical fiber 83 having a core 83a can be connected to the casing 80. The fourth embodiment is substantially same as the second embodiment except that an end 83b of the optical fiber 83 is formed obliquely to an optical axis 91.

In the fourth embodiment, the distance b means a distance between the center of the oblique end 83b of the optical fiber 83 and the center line of the lens 82.

With the photoreceiver according to the fourth embodiment, the diameter of a light beam 92 converged on a light receiving face 81a of the photodiode 81 also becomes larger than that when the end 83b lies at a base position 94, so that the optical power density on the light receiving face 81a is reduced to 25 W/cm².

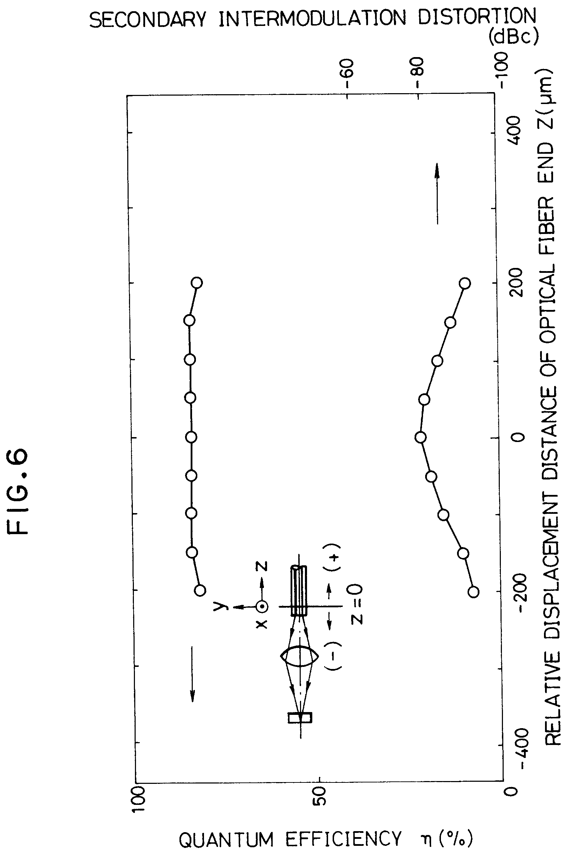

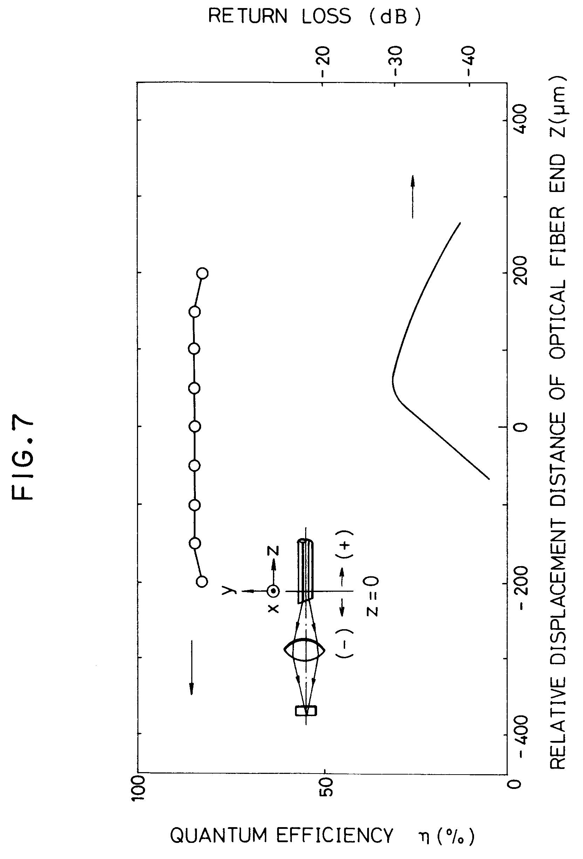

Fig.6 is a graph showing the relationships of the quantum efficiency and second order intermodulation distortion with the shift amount Z from the base position of the end of the optical fiber for the first to fourth embodiments described above. Fig.7 is a graph showing the relationships of the quantum efficiency and return loss with the shift amount Z. The data shown in the graphs resulted from measuring, provided that the input optical power is 0.5 mW and the optical modulation degree per laser was 50%, measured by a 1.3-µm wave 2-laser, 2-tone method. The displacements of the fiber in the X and Y directions perpendicular to the optical axis were set so as to maximize the quantum efficiency η of the photodiode. The quantum efficiency means the photosensitivity of the photodiode used. In the both graphs, the quantum efficiency η is always held approximately 84%.

In FIGS.6 and 7, when the end of the optical fiber lies at the base position, Z equals to zero, or Z = 0; the direction in which the end of the fiber approaches the lens along the optical axis from the base position is indicated as - (minus) and the direction in which the end is separated from the lens is indicated as + (plus).

From Fig.6, it is understood that the second order intermodulation distortion is -78 dBc when Z=0 in the conventional example, while it is reduced to -86 dBc when Z=-100 µm in the first and third embodiments or when Z=+100 µm in the second and fourth embodiments.

The condition that the second order intermodulation distortion is less than -80 dBc is satisfied in the ranges of Z<-20 µm and Z>+20 µm, each of which corresponds to the range in which the optical power density on the light receiving face of the photodiode is less than 100 W/cm². Therefore, if the end of the optical fiber is positioned so that the optical power density on the light receiving face becomes less than 100 W/cm², second order intermodulation distortion of less than -80 dBc can be obtained.

Since the focal point is set behind the light receiving face of the photodiode, that is in the opposite direction to the lens, in the first and third embodiments, the diameter of the light beam, when the light reflected on the light receiving face enters the end of the optical fiber, becomes larger than the diameter of the core of the fiber, as shown in Fig.4. Therefore, the return loss can be increased while the maximum quantum efficiency is maintained. The third embodiment in which the end of the optical fiber is oblique to the optical axis provides a larger effect of an improvement in the return loss than the first embodiment in which the end is perpendicular to the optical axis.

Fig.7 shows the return loss characteristic in the third and fourth embodiments. The return loss characteristic in the first and second embodiments (not shown) has the same tendency as shown in Fig.7 except that the return loss value is slightly small as compared with that in the third and fourth embodiments.

As understood from Fig.7, if the position of the end of the optical fiber is brought near to the lens from the base position as in the third embodiment, the return loss increases gradually with the displacement distance Z. Although the return loss is -35 dB when Z=0, it can be obtained in the range of -52 to -55 dB when Z=-100 µm as in the first and third embodiments; a large return loss improvement effect of more than 15 dB is provided as compared with the conventional example.

In the fourth embodiment, since the focal point is set ahead of the light receiving face of the photodiode, or on the side near the lens, while the displacement distance Z is short, the diameter of the light beam, when the light reflected on the light receiving face enters the end of the optical fiber, becomes smaller than the diameter of the core of the fiber and as a result, the return loss decreases. When the displacement distance Z becomes long, the diameter of the light beam, when the light enters the end of the fiber, becomes larger than that of the fiber core, thus the return loss increases.

Therefore, if a high return loss is not necessary although low intermodulation distortion is required, any of the first to fourth embodiments can be applied. If a high return loss as well as low intermodulation distortion is required, the first and third embodiments are preferable. However, if the displacement distance Z is adjusted to a proper value, the second and fourth embodiments can also be applied.

Although the invention has been described with its preferred embodiments, it is not limited to the embodiments. For example, as a light receiving element, an avalanche photodiode may be used in place of a pin photodiode and the back-illumination type may be used in place of the front-illumination type. Further, a photodiode made of other material in addition to the InGaAs/InP material may be used.

## Claims

1. A photoreceiver comprising a casing to which an end of an optical fiber can be connected, a semiconductor light receiving element and an optical lens, said element and said lens being housed in said casing;
wherein an optical fiber connected to said casing is optically coupled to said light receiving element through said lens, and the end of said fiber is positioned so that a focal point generated when a light beam emitted from said end of said fiber passes through said lens shifts in the optical axis direction of said lens with respect to the light receiving face of said element.

2. The photoreceiver as claimed in claim 1, wherein said end of said optical fiber is positioned so that said focal point shifts to the opposite side to said lens in said optical axis direction with respect to said light receiving face of said element.

3. The photoreceiver as claimed in claim 1, wherein said end of said optical fiber is positioned so that said focal point shifts to the side of said lens in said optical axis direction with respect to said light receiving face of said element.

4. The photoreceiver as claimed in claim 1, wherein said end of said optical fiber is oblique to said optical axis.

5. The photoreceiver as claimed in claim 1, wherein optical power density on said light receiving face is less than 100 W/cm².

6. The photoreceiver as claimed in claim 1 wherein the distance between the position of said end of said optical fiber and the reference position therefor for a light beam emitted from said end to form an image on said light receiving face is set to at least 20 µm.
